# EUROPEAN PATENT SPECIFICATION

(11) **EP 1 865 681 B1**
(45) Date of publication and mention of the grant of the patent: **18.11.2009**
(21) Application number: 06741957.2
(22) Date of filing: 23.05.2006
(51) Int. Cl.: H04L 29/12, H04L 12/46, H04L 29/06

(54) **A METHOD FOR TRAVERSING THE NETWORK ADDRESS CONVERSION/FIREWALL DEVICE**
VERFAHREN ZUM DURCHQUEREN EINER NAT-FIREWALL-VORRICHTUNG
PROCEDE PERMETTANT DE TRAVERSER UN DISPOSITF DE CONVERSION D ADRESSE RESEAU/COUPE-FEU

(30) Priority: 23.05.2005 CN 200510072499
(43) Date of publication of application: 12.12.2007
(73) Proprietor: Huawei Technologies Co., Ltd., Longgang District Shenzhen Guangdong 518129 (CN)
(72) Inventor: YAO, Xin,Huawei Administration Building, Guangdong518129 (CN); JU, Liedan,Huawei Administration Building, Guangdong518129 (CN)
(74) Representative: Manitz, Finsterwald & Partner GbR
(86) International application number: PCT/CN2006/001069
(87) International publication number: WO 2006/125383

(56) References cited:
- WO-A-00/78008
- WO-A2-02/071717
- CN-A- 1 516 409
- CN-A- 1 551 569
- CN-A- 1 561 066
- US-A1- 2003 048 780
- US-A1- 2003 188 001

## Description

### Field of the Invention

The present invention relates to communication technologies, and particularly, to a method and system for traversing a Network Address Translation (NAT) or Firewall (FW) device.

### Background of the Invention

In recent years, mobile communication has become one of the fields with severest competition, and telecommunication operators should provide more and more differentiated services to promote their competitiveness. The Next Generation Network (NGN), owing to its ability to provide broad application prospect and satisfy diversified and customized service requirements, has been the focus of the field, where soft switching and packet switching technologies are core technologies of the NGN.

At present, the NGN encounters many problems in applications, e.g., in user access. Users access the NGN based on a packet network via Internet Protocol (IP) addresses. On account of such as short supply of IP addresses and security problem, a lot of enterprise networks and customer premise networks adopt private IP addresses to access a public network via NAT or FW devices equipped at an egress.

The most distinguished advantage of the NGN is that the NGN can provide users with varieties of services, especially IP Centrex service integrating voice, data and audio services for enterprise users. It is expected that all network applications should communicate with others in a standard mode, i.e., all network applications communicate with others by using the IP addresses in packet headers. Therefore, a control channel or media channel for bearing such audio or video protocol over the IP as H.323, Session Initiation Protocol (SIP), Media Gateway Control Protocol (MGCP) and H.248, can hardly traverse a conventional NAT or FW device to communication with public networks. In other words, most of the conventional NAT or FW devices just support services based on a data application protocol of Hyper Text Transfer Protocol (HTTP), do not support session-based services in traversing. Therefore, it comes to be an urgent issue to enable services based on a private network address to traverse the NAT or the FW device, and the issue has been the greatest challenge for implementing the NGN network services at present.

An Application Level Gateway (ALG) is used in the conventional method for traversing the NAT or the FW device. The ALG is a device which can recognize designated IP protocols (for example H.323, SIP or MGCP). The ALG can be a standalone device between a public network and a private network, or an embedded part in the NAT or FW device. The ALG communicates with the NAT or FW device to establish NAT or FW device status information and alters specific data encapsulated in the data fields of IP packets by using the NAT or FW device status information, and enables the IP packets to traverse the NAT or FW device via other necessary processes.

WO 00/78008 dislcoses a method for providing network security services, such as those provided by the IPSEC protocol, through NAT.

US 2003/0188001 dislcoses a tunneling system and method for traversing firewalls, NATs, and proxies.

A large number of conventional NAT or FW devices do not support the ALG scheme, hence the ALG scheme can only be adopted when the NAT or FW devices are replaced or upgraded. Users generally expect operators to provide new conversational services over IP without changing the existing NAT or FW devices. Therefore, the ALG scheme is unable to achieve the objective of traversing the NAT or FW devices without modifying the NAT or FW devices.

### Summary

In view of the above problem in the prior art, embodiments of the present invention intend to provide a method according to claim 1 and system according to claim 12 and 16 for traversing NAT or FW devices without modifying the NAT or FW devices.

The schemes of the present invention is achieved with the following technical scheme:
setting up a User Datagram Protocol, UDP, tunnel between a first device and a second device, wherein the first device and the second device are on two sides of an NAT or FW device;
wherein setting up the UDP tunnel between the first device and the second device comprises:
inserting a UDP tunnel header, UTH, into a first packet sent from the first device,
allocating a new source IP address to the first packet,
saving UDP tunnel information;
transmitting, via the UDP tunnel according to the UDP tunnel information, a second packet originated from one of the two devices, to the other of the two devices through the NAT or FW device.

The method further includes:
deploying a UDP Tunnel Client, UTC, and a UDP Tunnel Server, UTS, between the first device and the second device;
wherein setting up the UDP tunnel comprises:
setting up the UDP tunnel between the first device and the second device with the UTC and the UTS.

The setting up the UDP tunnel with the UTC and the UTS includes:
receiving, by the UTC, the first packet originated from the first device, and inserting, by the UTC, a UDP tunnel header, UTH, behind the Internet Protocol, IP, header of the first packet originated from the first device; and
receiving, by the UTS, the first packet sent from the UTC via the NAT or FW device, allocating, by the UTS, the new source IP address to the first packet, saving, by the UTS, the source port and destination port of the UTH, the source IP address of the first packet sent from the UTC and the new source IP address allocated for the first packet sent from the UTC as an entry of the UDP tunnel information.

Transmitting the second packet originated from the first device to the second device includes:
replacing, by the UTS, the source IP address of the second packet sent from the UTC with the new source IP address, removing, by the UTS, the UTH, and transmitting, by the UTS, the second packet sent from the UTC to the second device.

Upon receiving the first packet sent from the UTC via the NAT or FW device, the method further includes:
searching, by the UTS, with the source IP address of the first packet sent from the UTC and the source port of the UTH as indexes,
wherein the allocating, by the UTS, the new source IP address to the first packet includes:
allocating, by the UTS, the new source IP address to the first packet sent from the UTC if the UDP tunnel information is not found.

The setting up the UDP tunnel with the UTC and the UTS includes:
receiving, by the UTC, the first packet originated from the first device and inserting, by the UTC, a UTH behind the IP header of the first packet originated from the first device;
receiving, by the UTS, the first packet sent from the UTC via the NAT or FW device, allocating, by the UTS, the new source IP address and a new source port to the first packet sent from the UTC, and saving, by the UTS, the source port and the destination port of the UTH, the source port in the UTH payload, the source IP address of the first packet sent from the UTC, the new source IP address and the new source port in the first packet sent from the UTC as an entry of the UDP tunnel information.

Transmitting the second packet originated from the first device to the second device includes:
replacing, by the UTS, the source IP address of the second packet sent from the UTC with the new source IP address and, replacing the source port in the UTH payload with the new source port, removing, by the UTS, the UTH, and transmitting , by the UTS, the second packet sent from the UTC to the second device.

Upon receiving the first packet from the UTC via the NAT or FW device, the method further includes:
searching, by the UTS, with the source IP address of the first packet sent from the UTC, the source port of the UTH and the source port in the UTH payload as indexes, and
wherein the allocating, by the UTS, the new source IP address and a new source port to the first packet sent from the UTC includes:
allocating , by the UTS, a new source IP address and a new source port to the first packet sent from the UTC if the UDP tunnel information is not found.

Transmitting the second packet originated from the second device via the UDP tunnel to the first device includes:
searching, by the UTS, with the destination IP address of the second packet originated from the second device as an index upon receipt of the second packet from the second device, ignoring the second packet originated from the second device, and terminating the process if the UDP tunnel is not found; otherwise,
replacing, by the UTS, the destination IP address of the second packet originated from the second device with the source IP address in the UDP tunnel information, inserting, by the UTS, behind the IP header of the second packet originated from the second device, a UTH taking the source port of the UTH in the UDP tunnel information as the destination port and the destination port of the UTH in the UDP tunnel information as the source port; and
receiving, by the UTC, the second packet sent from the UTS via the NAT or FW device, removing, by the UTC, the UTH in the second packet sent from the UTS, and transmitting, by the UTC, the second packet sent from the UTS to the first device.

The UTH includes a standard UDP header and a protocol field for indicating the type of the first packet borne in the original packet.

The UTH further includes a type field for indicating the type of the UDP tunnel packet.

A system for implementing an NAT or FW device traverse includes a first device, a second device and an NAT or FW device, wherein a UDP tunnel is set up between the first device and the second device; wherein the UDP tunnel is set up between the first device and the second device by: inserting a UDP tunnel header, UTH, into a first packet sent from the first device, allocating a new source IP address to the first packet, and saving UDP tunnel information;
the second device is configured to transmit a second packet to the NAT or FW device via the UDP tunnel;
the NAT or FW device is configured to forward the second packet to the first device according to the UDP tunnel information; and
the first device is configured to receive the second packet.

The system further includes:
a UTC, configured to receive the first packet originated from the first device and insert the UTH behind the IP header of the first packet originated from the first device; and
a UTS, configured to receive the first packet sent from the UTC via the NAT or FW device, allocate the new source IP address to the first packet sent from the UTC, and save the source port and destination port of the UTH, the source IP address of the first packet sent from the UTC and the new source IP address in the first packet sent from the UTC as an entry of the UDP tunnel information.

The system further includes:
a UTC, configured to receive the packet originated from the first device and insert the UTH behind the IP header of the first packet originated from the first device; and
a UTS, configured to receive the first packet sent from the UTC via the NAT or FW device, allocate the new source IP address and a new source port to the first packet sent from the UTC, and save the source port and the destination port of the UTH, the source port in the UTH payload, the source IP address of the first packet sent from the UTC, the new source IP address and the new source port in the first packet sent from the UTC as an entry of the UDP tunnel information.

The UTC is a standalone device or an embedded part in a proxy device, an NAT device, a firewall, a router or a server;
the UTS is a standalone device or an embedded part in a proxy device, an NAT device, a firewall, a router or a server;
the UTC is on one side of the NAT or FW device and the UTS is on the other side of the NAT or FW device; or
the UTC is on one side of the NAT or FW device and the UTS is in the NAT or FW device.

A system for implementing an NAT or FW device traverse, characterized by includes a first device, a second device and an NAT or FW device, wherein a UDP tunnel is set up between the first device and the second device; wherein the UDP tunnel is set up between the first device and the second device by: inserting a UDP tunnel header, UTH, into a first packet sent from the first device, allocating a new source IP address to the first packet, and saving UDP tunnel information;
the first device is configured to transmit a second packet to the NAT or FW device via the UDP tunnel;
the NAT or FW device is configured to forward the second packet to the second device according to the UDP tunnel information; and
the second device is configured to receive the second packet.

It can be seen from a comparison between the scheme provided by the present invention and the conventional scheme that the NAT or FW device traversal is achieved by establishment of a UDP tunnel between two devices, and use of the UDP tunnel for traversing the NAT or FW device. The present invention enables packets of H.323, SIP, MGCP and H.248 services to traverse the NAT or FW device without modifying the NAT or FW device. With the scheme provided by the present invention, the security of the existing network may not be affected, and the security and QoS of the existing services in the network may not be affected either.

### Brief Description of the Drawings

Figure 1 is a schematic diagram illustrating a system for implementing an NAT or FW device traverse according to an embodiment of the present invention;
Figure 2 is a simplified flow chart of transmitting a packet by a terminal to a server via a UTC and a UTS according to the first embodiment of the present invention;
Figure 3 is a schematic diagram illustrating the process of inserting a UTH by a UTC behind an IP header of a packet from a terminal according to the first embodiment of the present invention;
Figure 4 is a simplified flow chart of transmitting a packet from a server to a terminal via a UTS and a UTC according to the first embodiment of the present invention;
Figure 5 is a simplified flow chart of transmitting a packet from a terminal to a server via a UTC and a UTS according to the second embodiment of the present invention;
Figure 6 is a schematic diagram illustrating the data in a UTH transmitted in a process of transmitting data between a terminal and a server according to the present invention.

### Detailed Description of the Invention

The present invention provides a method for traversing an NAT or FW device. The present invention includes deploying a UDP Tunnel Client (UTC) and a UDP Tunnel Server (UTS) between two devices which are on the two sides of an NAT or FW device separately, setting up a UDP tunnel between the two devices through which a packet may traverse the NAT or FW device. In the present invention, the UTC can be deployed on one side of the NAT or FW device while the UTS can be deployed on another side of the NAT or FW device; alternatively, the UTC may be deployed on one side of the NAT or FW device while the UTS may be deployed in the NAT or FW device. In embodiments provided as follows, the UTC is deployed on one side of the NAT or FW device and the UTS is deployed on the other side of the NAT / FW device. It is known to those skilled in the art that the NAT / FW device represents an NAT or FW device.

According to the present invention, first of all, the UTC is deployed on one side of the NAT or FW device while the UTS is deployed on the other side of the NAT or FW device. The UTC or UTS can be a standalone device or an embedded part of any device such as a proxy device, an NAT device, a firewall device, a router or a server. The two devices capable of implementing the NAT or FW device traverse may be any two network devices, such as a terminal and a server, two terminals, two servers and two routers.

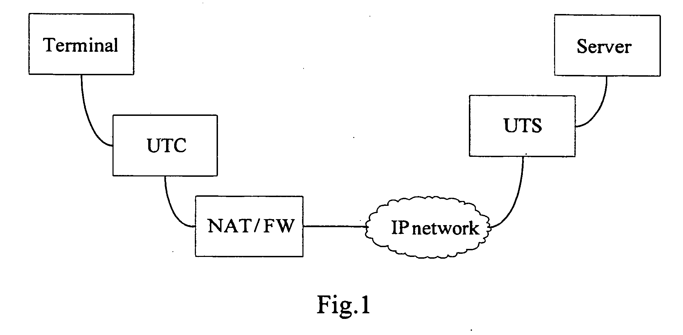

Figure 1 is a schematic diagram illustrating a system for implementing an NAT or FW device traverse according to an embodiment of the present invention. In the network shown in Figure 1, the UTC is deployed on the terminal side and the UTS is deployed on the server side. With the method provided by the present invention, a UDP tunnel is set up between the terminal and the server, and all packets to-be-transmitted between the terminal and the server are transmitted via the UDP tunnel once the UDP tunnel is set up.

In the network shown in Figure 1, the packets to-be-transmitted include the packets from the terminal to the server via the UTC and the UTS and the packets from the server to the terminal via the UTC and the UTS. For the former, the terminal functions as a packet transmitter and the server functions as a packet receiver, and for the latter, the server functions as the packet transmitter and the terminal functions as the packet receiver. The UDP tunnel is set up during the procedure of sending a packet from the terminal to the server.

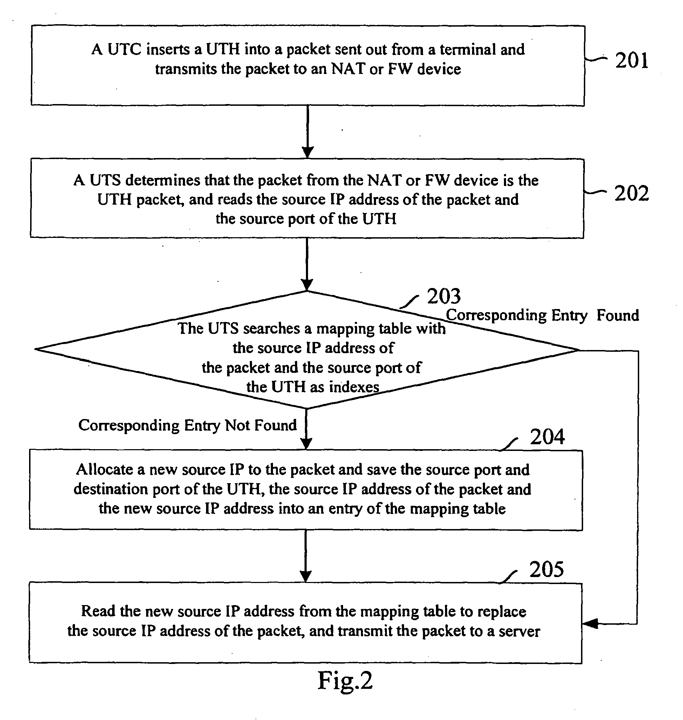

The first embodiment of the present invention is described hereinafter in accordance with the accompanying drawings. Figure 2 is a simplified flow chart of transmitting a packet from a terminal to a server via a UTC and a UTS according to the first embodiment of the present invention. Operations performed by the UTC and the UTS on a packet are described in the following flow chart, which includes the following processes.

In block 201, the UTC inserts a UDP tunnel header (UTH) into the packet sent from the terminal, and transmits the packet to an NAT or FW device.

Upon the receipt of the packet sent from the terminal, the UTC inserts the UTH into the packet behind the IP header of the packet.

The UTH mainly includes:
a standard UDP header, mandatory.
a protocol field, mandatory. The protocol field is behind the standard UDP header, and used for indicating the type of the packet borne in the source IP packet, for example the packet is a UDP packet, a Transfer Control Protocol (TCP) packet, or a Stream Control Transfer Protocol (SCTP) packet.
a type field, optional. The type field is behind the standard UDP header, and used for indicating the type of the packet of the UDP tunnel itself.

Upon the receipt of the packet, the UTC inserts the UTH behind the IP header of the packet sent from the terminal. The protocol field in the UTH is identical with the protocol field in the IP header of the packet. The UTC recalculates the checksum of the packet and transmits the packet to the NAT or FW device which transmits the packet to the UTS upon the receipt of the packet.

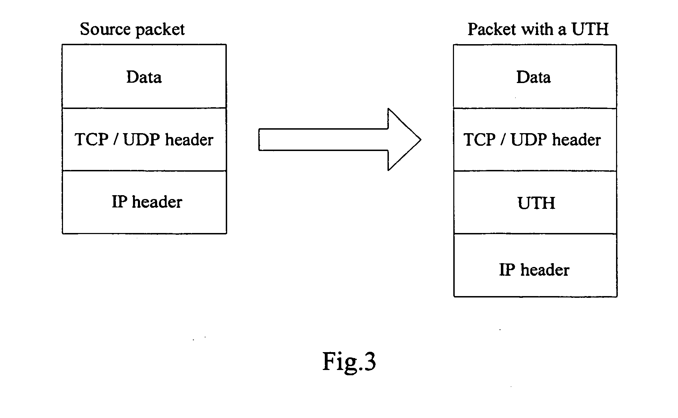

Figure 3 is a schematic diagram illustrating the process of inserting the UTH behind the IP header of the packet sent from the terminal by the UTC. As shown in Figure 3, the original packet includes the IP header, the TCP or UDP header and data. In block 201, the UTC inserts the UTH into the packet to form the packet as shown in Figure 3.

In block 202, the UTS determines that the packet from the NAT or FW device is a UDP tunnel packet, and reads the source IP address of the packet and source port of the UTH from the packet.

Upon receipt of the packet from the NAT or FW device, the UTS judges whether the packet is the UDP tunnel packet by checking whether the packet includes the UTH. If the packet includes the UTH, the UTS reads the source IP address of the packet and the source port of the UTH and proceeds to block 203; otherwise the UTS processes the packet according to common packet processing procedure used in a conventional method and terminates the process.

In block 203, the UTS searches for a mapping table with the source IP address of the packet and the source port of the UTH as indexes.

Generally, all UDP tunnel packets from the same UTC have a same source port and destination port of the UTH. In the embodiment, the UTS keeps at mapping table in which each entry includes a quadriad of information fields, i.e., the source port and the destination port of the UTH, the source IP address of the packet and a newly-allocated source IP address, and each entry indicates a UDP tunnel between the UTC and the UTS.

The UTS searches for the mapping table with the source IP address of the packet and the source port of the UTH read from the packet as indexes. If no corresponding entry is found, block 204 is performed. If a corresponding entry is found, which means the UDP tunnel corresponding to the source IP address of the packet has been set up between the UTS and the UTC and the packet can be transmitted via the UDP tunnel directly, block 205 is performed.

In block 204, the UTS allocates a new source IP address to the packet, and saves the source port and the destination port of the UTH, the source IP address of the packet and the new source IP address into the mapping table.

If no corresponding entry is found in block 203, it means no UDP tunnel corresponding to the source IP address of the packet is set up between the UTS and the UTC. Then, the UTS allocates a new source IP address to the packet and saves the source port and the destination port of the UTH, the source IP address of the packet and the new source IP address into a new entry of the mapping table. Therefore, the UDP tunnel corresponding to the source IP address of the packet is set up between the UTS and the UTC.

In block 205, the UTS replaces the source IP address of the packet with the new source IP address read from the corresponding entry of the mapping table, and transmits the processed packet to the server.

In this process, the UTS reads the new source IP address from the corresponding entry of the mapping table and replaces the source IP address of the packet with the new source IP address. Afterwards, the UTS removes the UTH of the packet, recalculates the checksum of the packet and transmits the packet to the server.

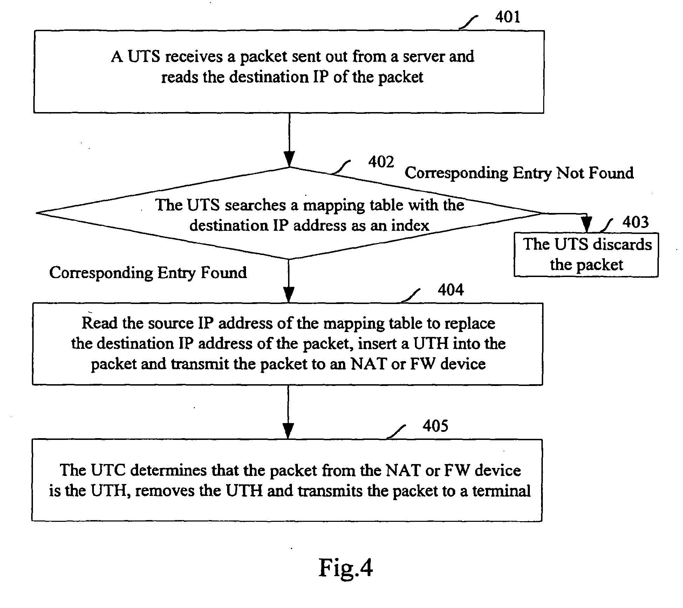

Figure 4 is a simplified flow chart of transmitting a packet by a server to a terminal via a UTS and a UTC according to the first embodiment of the present invention. Operations performed by the UTC and the UTS on a packet are described in the following flow chart which includes the following processes.

In block 401, upon the receipt of a packet sent from a server, the UTS reads the destination IP address of the packet.

In block 402, the UTS searches for a mapping table with the destination IP address as an index.

The UTS searches for the mapping table saved in the UTS with the destination IP address as the index. If a corresponding entry is found in the mapping table in which a new source IP address is identical with the destination IP address of the packet, block 404 is performed; otherwise block 403 is performed.

In block 403, the UTS ignores the packet.

If no corresponding entry is found in the mapping table which indicates that the packet should not be processed by the UTS, the UTS ignores the packet directly and terminates the process.

In block 404, the UTS replaces the destination IP address in the packet with the source IP address of the packet saved in the mapping table, inserts a UTH into the packet and transmits the packet to an NAT or FW device.

If a corresponding entry is found in the mapping table which indicates that the packet should be processed by the UTS and a corresponding UDP channel has been set up. The source IP address of the packet in the entry is read to replace the destination IP address and a UTH is inserted into the packet behind the IP header of the packet. The destination port of the UTH is the source port of the UTH in the entry and the source port of the UTH is the destination port of the UTH in the entry. The protocol field of the UTH is identical with the protocol field of the original IP header. The value of the protocol field in the new IP header is updated to 17, which indicates the port number of UDP protocol. The UTS recalculates the checksum of the packet and transmits the packet to the NAT or FW device which transmits the packet to the UTC upon the receipt of the packet.

In block 405, the UTC determines that the packet sent from the NAT or FW device is a UDP tunnel packet, removes the UTH from the packet and transmits the packet to the terminal.

Upon the receipt of the packet sent from the NAT or FW device, the UTC determines whether the packet is the UDP tunnel packet according to whether the packet includes the UTH. If the packet includes the UTH, the UTC removes the UTH and transmits the packet to the terminal according to the destination IP address in the packet; otherwise, the UTC processes the packet according to a common packet processing procedure used in a conventional.

If there are no adequate IP addresses for a UTS to allocate, the second embodiment of the present invention provides another scheme. In the embodiment, a UTC processes a packet in the same manner as in the first embodiment while the UTS adopts a different procedure. For example, the UTS allocates an IP address and a port to the packet.

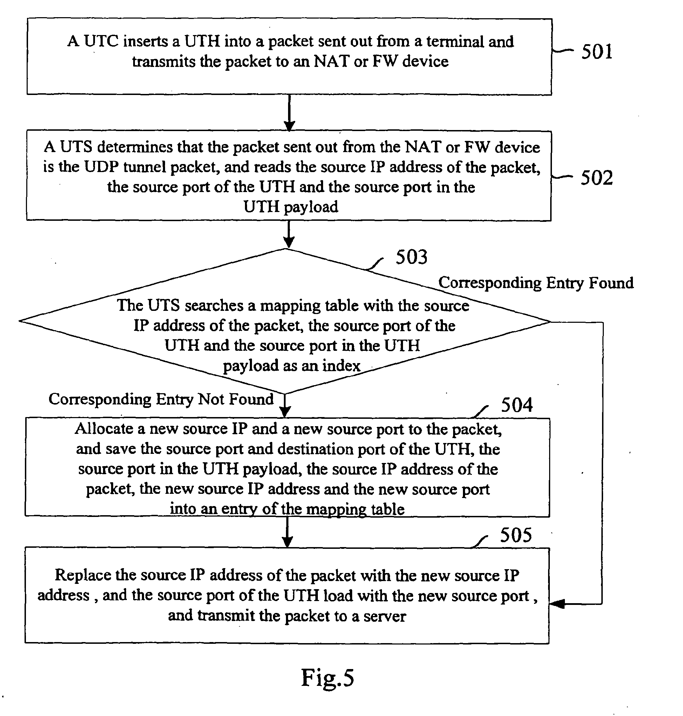

Figure 5 is a simplified flow chart of transmitting a packet by a terminal to a server via a UTC and a UTS according to the second embodiment of the present invention. Operations performed by the UTC and the UTS on a packet are described in the following flow chart, which includes the following processes.

In block 501, the UTC inserts a UTH into a packet sent from the terminal, and transmits the packet to an NAT or FW device.

In this block, similar to block 201, the UTC inserts the UTH into the packet sent from the terminal behind the IP header upon the receipt of the packet. The protocol field in the UTH is identical with the protocol field in the original IP header of the packet. The UTC recalculates the checksum of the packet and transmits the packet to the NAT or FW device which transmits the packet to the UTS upon the receipt of the packet.

In block 502, the UTS determines that the packet sent from the NAT or FW device is a UDP tunnel packet and reads the source IP address of the packet, the source port of the UTH and the source port in the UTH payload.

Upon the receipt of the packet sent from the NAT or FW device, the UTS judges whether the packet is the UDP tunnel packet by checking whether the packet includes the UTH. If the packet includes the UTH, the UTS reads the source IP of the packet, the source port of the UTH and the source port in the UTH payload and proceeds to block 503; otherwise the UTS processes the packet according to a common packet processing procedure used in a conventional method and terminates the process.

In block 503, the UTS searches for a mapping table with the source IP of the packet, the source port of the UTH and the source port in the UTH payload as indexes.

Unlike the procedure of searching for the mapping table in block 203, in the embodiment, the UTS keeps the mapping table in which each entry includes a hexad of information fields, i.e., the source port and the destination port of the UTH, the source port in the UTH payload, the source IP address of the packet, a new source IP address and a new source port, and each entry indicates a UDP tunnel between the UTC and the UTS.

The UTS searches for the mapping table with the source IP address of the packet, the source port of the UTH and the source port in the UTH payload as indexes. If no corresponding entry is found, block 504 is performed. If a corresponding entry is found, which means the corresponding UDP tunnel has been set up and the packet can be transmitted via the UDP tunnel directly, block 505 is performed.

In block 504, the UTS allocates a new source IP address and a new source port to the packet, and saves the source port and the destination port of the UTH, the source port in the UTH payload, the source IP address of the packet, the new source IP address and the new source port into the mapping table.

The UTS searches for the mapping table with the source IP address of the packet, and the source port of the UTH and the source port in the UTH payload as indexes. If no corresponding entry is found, which indicates the UDP tunnel corresponding to the source IP address of the packet has not been set up between the UTS and the UTC, the UTS allocates the new source IP address and new source port to the packet, and saves the source port and the destination port of the UTH, the source port in the UTH payload, the source IP address of the packet, the new source IP address and new source port into a new entry of the mapping table. Thus, the UDP tunnel corresponding to the source IP address of the packet is set up between the UTS and the UTC.

In block 505, the UTS replaces the source IP address of the packet with the new source IP address and the source port in the UTH payload with the new source port, and transmits the packet to the server.

The UTS reads the new source IP address and the new source port from a corresponding entry of the mapping table, and replaces the source IP address of the packet with the new source IP address and the source port in the UTH payload with the new source port. The UTS removes the UTH in the packet, recalculates the checksum of the packet and transmits the packet to the server.

In the second embodiment, the process of transmitting packet from the server to the terminal via the UTS and the UTC is very similar to the corresponding process in the first embodiment and will not be described repeatedly.

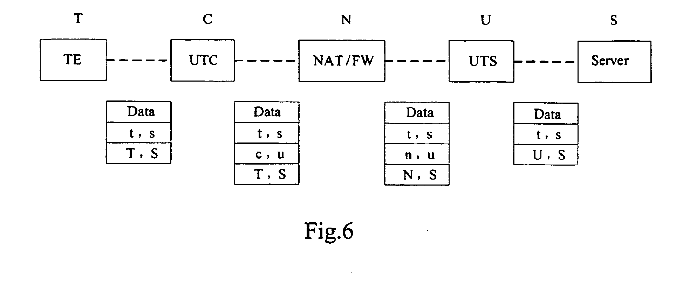

Figure 6 is a structure diagram illustrating the data carried in a UTH transmitted during the procedure of the data transmission between the server and the terminal according to the first embodiment and the second embodiment. The UTH is transmitted between two devices. Figure 6 shows the information of the devices carried in the UTH. In Figure 6, T and TE stand for the terminals, C stands for the UTC, N stands for the NAT or FW device, U stands for the UTS, S and Server stand for the servers. The "t, s" indicates the source port and the destination port in the UTH payload, the "T, S" indicates that the source IP address of the packet, i.e., the IP address of the terminal and the destination IP address of the packet, i.e., the IP address of the server. The "c, u" indicates the source port and the destination port of the UTH, and the "n, u" indicates the source port and the destination port after the procession of the NAT.

In the second embodiment, similar to the first embodiment, the UTC or UTS can be a standalone device or an embedded part of any device, such as a proxy device, an NAT device, a firewall, a router and a server.

When the UTS is embedded in a proxy device, functions of the UTS can be combined with the conventional functions of the proxy device, that is to say, the proxy device alters the destination IP address of the packet and further implements the operations described in the two embodiments.

When the UTS is embedded in the NAT or FW device, functions of the UTS can be combined with the conventional functions of the NAT or FW device, that is to say, the NAT or FW device alters the destination IP address of the packet and further implements the operations described in the two embodiments.

It should be emphasized that the above embodiments, particularly, any preferred embodiment, are merely possible examples of implementation, merely set forth for a clear understanding of the principles of the invention. Many variations and modifications may be made to the above preferred embodiments without departing substantially from the spirit and principles of the invention. All such modifications and variations are intended to be included within the scope of this disclosure and the above preferred embodiments and protected by the following claims.

## Claims

1. A method for traversing a Network Address Translation, NAT, or Firewall, FW, device, **characterized by** comprising:
setting up a User Datagram Protocol, UDP, tunnel between a first device and a second device, wherein the first device and the second device are on two sides of an NAT or FW device,
wherein setting up the UDP tunnel between the first device and the second device comprises:
inserting a UDP tunnel header, UTH, into a first packet sent from the first device,
allocating a new source IP address to the first packet,
saving UDP tunnel information;
transmitting, via the UDP tunnel according to the UDP tunnel information, a second packet originated from one of the two devices, to the other of the two devices through the NAT or FW device.

2. The method of Claim 1, further comprising:
deploying a UDP Tunnel Client, UTC, and a UDP Tunnel Server, UTS, between the first device and the second device;
wherein setting up the UDP tunnel comprises:
setting up the UDP tunnel between the first device and the second device with the UTC and the UTS.

3. The method of Claim 2, wherein the setting up the UDP tunnel with the UTC and the UTS comprises:
receiving, by the UTC, the first packet originated from the first device, and inserting, by the UTC, the UDP tunnel header, UTH, behind the Internet Protocol, IP, header of the first packet originated from the first device (201, 501); and
receiving, by the UTS, the first packet sent from the UTC via the NAT or FW device, allocating, by the UTS, the new source IP address to the first packet, saving, by the UTS, the source port and destination port of the UTH, the source IP address of the first packet sent from the UTC and the new source IP address allocated for the first packet sent from the UTC as an entry of the UDP tunnel information (204).

4. The method of Claim 3, wherein transmitting the second packet originated from the first device to the second device comprises:
replacing, by the UTS, the source IP address of the second packet sent from the UTC with the new source IP address, removing, by the UTS, the UTH, and transmitting, by the UTS, the second packet sent from the UTC to the second device (205).

5. The method of Claim 3, wherein upon receiving the first packet sent from the UTC via the NAT or FW device, further comprises:
searching, by the UTS, with the source IP address of the first packet sent from the UTC and the source port of the UTH as indexes (203);
wherein the allocating, by the UTS, the new source IP address to the first packet comprises:
allocating, by the UTS, the new source IP address to the first packet sent from the UTC if the UDP tunnel information is not found.

6. The method of Claim 2, wherein the setting up the UDP tunnel with the UTC and the UTS comprises:
receiving, by the UTC, the first packet originated from the first device and inserting, by the UTC, the UTH behind the IP header of the first packet originated from the first device (201, 501);
receiving, by the UTS, the first packet sent from the UTC via the NAT or FW device, allocating, by the UTS, the new source IP address and a new source port to the first packet sent from the UTC, and saving, by the UTS, the source port and the destination port of the UTH, the source port in the UTH payload, the source IP address of the first packet sent from the UTC, the new source IP address and the new source port in the first packet sent from the UTC as an entry of the UDP tunnel information (504).

7. The method of Claim 6, wherein transmitting the second packet originated from the first device to the second device comprises:
replacing, by the UTS, the source IP address of the second packet sent from the UTC with the new source IP address, replacing the source port in the UTH payload with the new source port, removing, by the UTS, the UTH, and transmitting , by the UTS, the second packet sent from the UTC to the second device (505).

8. The method of Claim 6, wherein upon receiving the first packet from the UTC via the NAT or FW device, further comprises:
searching, by the UTS, with the source IP address of the first packet sent from the UTC, the source port of the UTH and the source port in the UTH payload as indexes (503);
wherein the allocating, by the UTS, the new source IP address and a new source port to the first packet sent from the UTC comprises:
allocating , by the UTS, the new source IP address and the new source port to the first packet sent from the UTC if the UDP tunnel information is not found.

9. The method of Claim 2, wherein tramsmitting the second packet originated from the second device via the UDP tunnel to the first device comprises:
searching, by the UTS, with the destination IP address of the second packet originated from the second device as an index upon receipt of the second packet from the second device (402), ignoring the second packet originated from the second device (403), and terminating the process if the UDP tunnel is not found; otherwise,
replacing, by the UTS, the destination IP address of the second packet originated from the second device with the source IP address in the UDP tunnel information, inserting, by the UTS, behind the IP header of the second packet originated from the second device, a UTH taking the source port of the UTH in the UDP tunnel information as the destination port and the destination port of the UTH in the UDP tunnel information as the source port (404); and
receiving, by the UTC, the second packet sent from the UTS via the NAT or FW device, removing, by the UTC, the UTH in the second packet sent from the UTS, and transmitting, by the UTC, the second packet sent from the UTS to the first device (405).

10. The method of Claim 3, wherein the UTH comprises a standard UDP header and a protocol field for indicating the type of the first packet borne in the original packet.

11. The method of Claim 10, wherein the UTH further comprises a type field for indicating the type of the UDP tunnel packet.

12. A system for implementing an NAT or FW device traverse, **characterized by** comprising a first device, a second device, a UDP Tunnel Client, UTC, a UDP Tunnel Server, UTS and an NAT or FW device, wherein the UTC is configured to insert a UDP tunnel header, UTH, into a first packet sent from the first device, and the UTS is configured to allocate a new source IP address to the first packet, and to save UDP tunnel information to set up a UDP tunnel between the first device and the second device; and
wherein
the second device is configured to transmit a second packet to the NAT or FW device via the UDP tunnel;
the NAT or FW device is configured to forward the second packet to the first device according to the UDP tunnel information; and
the first device is configured to receive the second packet:

13. The system of Claim 12, **characterized in that**
the UTC is configured to receive the first packet originated from the first device and insert the UTH behind the IP header of the first packet originated from the first device; and
the UTS is configured to receive the first packet sent from the UTC via the NAT or FW device, allocate the new source IP address to the first packet sent from the UTC, and save the source port and destination port of the UTH, the source IP address of the first packet sent from the UTC and the new source IP address in the first packet sent from the UTC as an entry of the UDP tunnel information.

14. The system of Claim of 12 **characterized in that**
the UTC is configured to receive the packet originated from the first device and insert the UTH behind the IP header of the first packet originated from the first device; and
the UTS is configured to receive the first packet sent from the UTC via the NAT or FW device, allocate the new source IP address and a new source port to the first packet sent from the UTC, and save the source port and the destination port of the UTH, the source port in the UTH payload, the source IP address of the first packet sent from the UTC, the new source IP address and the new source port in the first packet sent from the UTC as an entry of the UDP tunnel information.

15. The system of Claim 12, 13 out 14, wherein the UTC is a standalone device or an embedded part in a proxy device, an NAT device, a firewall, a router or a server;
the UTS is a standalone device or an embedded part in a proxy device, an NAT device, a firewall, a router or a server;
the UTC is on one side of the NAT or FW device and the UTS is on the other side of the NAT or FW device; or
the UTC is on one side of the NAT or FW device and the UTS is in the NAT or FW device.

16. A system for implementing an NAT or FW device traverse, **characterized by** comprising a first device, a second device, a UDP Tunnel Client, UTC, a UDP Tunnel Server, UTS and an NAT or FW device, wherein the UTC is configured to insert a UDP tunnel header, UTH, into a first packet sent from the first device and the UTS is configured to allocate a new source IP address to the first packet, and to save UDP tunnel information to set up a UDP tunnel between the first device and the second device; and
wherein
the first device is configured to transmit a second packet to the NAT or FW device via the UDP tunnel;
the NAT or FW device is configured to forward the second packet to the second device according to the UDP tunnel information; and
the second device is configured to receive the second packet.

## Patentansprüche

1. Verfahren zum Traversieren einer Network Address Translation-, NAT-, oder Firewall-Einrichtung, FW-Einrichtung, **dadurch gekennzeichnet, dass**
ein Benutzer-Datagramm-Protokoll-Tunnel, UDP-Tunnel, zwischen einer ersten Einrichtung und einer zweiten Einrichtung hergestellt wird, wobei sich die erste Einrichtung und die zweite Einrichtung an zwei Seiten einer NAT- oder FW-Einrichtung befinden,
wobei das Herstellen des UDP-Tunnels zwischen der ersten Einrichtung und der zweiten Einrichtung umfasst, dass
ein UDP-Tunnel-Header, UTH, in ein von der ersten Einrichtung gesendetes erstes Paket eingesetzt wird,
dem ersten Paket eine neue Quellen-IP-Adresse zugeteilt wird, eine UDP-Tunnelinformation gespeichert wird;
über den UDP-Tunnel gemäß der UDP-Tunnelinformation ein zweites Paket, das von einer der beiden Einrichtungen stammt, über die NAT- oder FW-Einrichtung an die andere der beiden Einrichtungen übertragen wird.

2. Verfahren nach Anspruch 1, das ferner umfasst, dass
zwischen der ersten Einrichtung und der zweiten Einrichtung ein UDP-Tunnel-Client, UTC, und ein UDP-Tunnel-Server, UTS, eingesetzt werden;
wobei das Herstellen des UDP-Tunnels umfasst, dass
der UDP-Tunnel zwischen der ersten Einrichtung und der zweiten Einrichtung mit dem UTC und dem UTS hergestellt wird.

3. Verfahren nach Anspruch 2,
wobei das Herstellen des UDP-Tunnels mit dem UTC und dem UTS umfasst, dass
durch den UTC das erste Paket, das von der ersten Einrichtung stammt, empfangen wird und durch den UTC der UDP-Tunnel-Header, UTH, hinter dem Internetprotokoll-Header, IP-Header, des ersten Pakets, das von der ersten Einrichtung stammt, eingesetzt wird (201, 501); und
durch den UTS das von dem UTC gesendete erste Paket über die NAT- oder FW-Einrichtung empfangen wird, die neue Quellen-IP-Adresse durch den UTS dem ersten Paket zugeteilt wird, durch den UTS der Quellen-Port und der Ziel-Port des UTH, die Quellen-IP-Adresse des von dem UTC gesendeten ersten Pakets und die für das von dem UTC gesendete erste Paket zugeteilte neue Quellen-IP-Adresse als Eintrag der UDP-Tunnelinformation gespeichert werden (204).

4. Verfahren nach Anspruch 3,
wobei das Übertragen des zweiten Pakets, das von der ersten Einrichtung stammt, an die zweite Einrichtung umfasst, dass
durch den UTS die Quellen-IP-Adresse des von dem UTC gesendeten zweiten Pakets durch die neue Quellen-IP-Adresse ersetzt wird, der UTH durch den UTS entfernt wird und das von dem UTC gesendete zweite Paket durch den UTS an die zweite Einrichtung übertragen wird (205).

5. Verfahren nach Anspruch 3,
wobei das Empfangen des von dem UTC gesendeten ersten Pakets über die NAT- oder FW-Einrichtung ferner umfasst, dass
durch den UTS mit der Quellen-IP-Adresse des von dem UTC gesendeten ersten Pakets und dem Quellen-Port des UTH als Indizes gesucht wird (203);
wobei das Zuteilen der neuen Quellen-IP-Adresse zu dem ersten Paket durch den UTS umfasst, dass
die neue Quellen-IP-Adresse dem von dem UTC gesendeten ersten Paket durch den UTS zugeteilt wird, wenn die UDP-Tunnelinformation nicht gefunden wird.

6. Verfahren nach Anspruch 2,
wobei das Herstellen des UDP-Tunnels mit dem UTC und dem UTS umfasst, dass
das erste Paket, das von der ersten Einrichtung stammt, durch den UTC empfangen wird und durch den UTC der UTH hinter dem IP-Header des ersten Pakets, das von der ersten Einrichtung stammt, eingesetzt wird (201, 501);
durch den UTS das von dem UTC gesendete erste Paket über die NAT- oder FW-Einrichtung empfangen wird, durch den UTS die neue Quellen-IP-Adresse und ein neuer Quellen-Port dem von dem UTC gesendeten ersten Paket zugeteilt werden und durch den UTS der Quellen-Port und der Ziel-Port des UTH, der Quellen-Port in den UTH-Nutzdaten, die Quellen-IP-Adresse des von dem UTC gesendeten ersten Pakets, die neue Quellen-IP-Adresse und der neue Quellen-Port in dem von dem UTC gesendeten ersten Paket als Eintrag der UDP-Tunnelinformation gespeichert werden (504).

7. Verfahren nach Anspruch 6,
wobei das Übertragen des zweiten Pakets, das von der ersten Einrichtung stammt, an die zweite Einrichtung umfasst, dass
durch den UTS die Quellen-IP-Adresse des von dem UTC gesendeten zweiten Pakets durch die neue Quellen-IP-Adresse ersetzt wird, der Quellen-Port in den UTH-Nutzdaten durch den neuen Quellen-Port ersetzt wird, durch den UTS der UTH entfernt wird und durch den UTS das von dem UTC gesendete zweite Paket an die zweite Einrichtung übertragen wird (505).

8. Verfahren nach Anspruch 6,
wobei das Empfangen des ersten Pakets von dem UTC über die NAT-oder FW-Einrichtung ferner umfasst, dass
durch den UTS mit der Quellen-IP-Adresse des von dem UTC gesendeten ersten Pakets, dem Quellen-Port des UTH und dem Quellen-Port in den UTH-Nutzdaten als Indizes gesucht wird (503);
wobei das Zuteilen der neuen Quellen-IP-Adresse und eines neuen Quellen-Ports zu dem von dem UTC gesendeten ersten Paket durch den UTS umfasst, dass
die neue Quellen-IP-Adresse und der neue Quellen-Port dem von dem UTC gesendeten ersten Paket durch den UTS zugeteilt werden, wenn die UDP-Tunnelinformation nicht gefunden wird.

9. Verfahren nach Anspruch 2,
wobei das Übertragen des zweiten Pakets, das von der zweiten Einrichtung stammt, über den UDP-Tunnel an die erste Einrichtung umfasst, dass
durch den UTS mit der Ziel-IP-Adresse des zweiten Pakets, das von der zweiten Einrichtung stammt, als Index beim Empfang des zweiten Pakets von der zweiten Einrichtung gesucht wird (402), das zweite Paket, das von der zweiten Einrichtung stammt, ignoriert wird (403), und der Prozess beendet wird, wenn der UDP-Tunnel nicht gefunden wird; ansonsten
die Ziel-IP-Adresse des zweiten Pakets, das von der zweiten Einrichtung stammt, durch den UTS durch die Quellen-IP-Adresse in der UDP-Tunnelinformation ersetzt wird, durch den UTS hinter dem IP-Header des zweiten Pakets, das von der zweiten Einrichtung stammt, ein UTH eingesetzt wird, wobei der Quellen-Port des UTH in der UDP-Tunnelinformation als Ziel-Port und der Ziel-Port des UTH in der UDP-Tunnelinformation als Quellen-Port hergenommen wird (404); und
durch den UTC das von dem UTS gesendete zweite Paket über die NAT- oder FW-Einrichtung empfangen wird, durch den UTC der UTH in dem von dem UTS gesendeten zweiten Paket entfernt wird, und durch den UTC das von dem UTS gesendete zweite Paket an die erste Einrichtung übertragen wird (405).

10. Verfahren nach Anspruch 3,
wobei der UTH einen Standard-UDP-Header und ein Protokollfeld umfasst, um den Typ des ersten Pakets, das in dem ursprünglichen Paket getragen ist, anzugeben.

11. Verfahren nach Anspruch 10,
wobei der UTH ferner ein Typfeld zum Angeben des Typs des UDP-Tunnelpakets umfasst.

12. System zum Realisieren einer NAT- oder FW-Einrichtungstraversierung, **gekennzeichnet durch**
eine erste Einrichtung, eine zweite Einrichtung, einen UDP-Tunnel-Client, UTC, einen UDP-Tunnel-Server, UTS, und eine NAT- oder FW-Einrichtung, wobei der UTC ausgestaltet ist, um einen UDP-Tunnel-Header, UTH, in ein von der ersten Einrichtung gesendetes erstes Paket einzusetzen, und der UTS ausgestaltet ist, um dem ersten Paket eine neue Quellen-IP-Adresse zuzuteilen, und eine UDP-Tunnelinformation zu speichern, um einen UDP-Tunnel zwischen der ersten Einrichtung und der zweiten Einrichtung herzustellen; und wobei
die zweite Einrichtung ausgestaltet ist, um ein zweites Paket über den UDP-Tunnel an die NAT- oder FW-Einrichtung zu übertragen; die NAT- oder FW-Einrichtung ausgestaltet ist, um das zweite Paket gemäß der UDP-Tunnelinformation an die erste Einrichtung weiterzuleiten; und
die erste Einrichtung ausgestaltet ist, um das zweite Paket zu empfangen.

13. System nach Anspruch 12,
**dadurch gekennzeichnet, dass**
der UTC ausgestaltet ist, um das erste Paket, das von der ersten Einrichtung stammt, zu empfangen und den UTH hinter dem IP-Header des ersten Pakets, das von der ersten Einrichtung stammt, einzusetzen; und
der UTS ausgestaltet ist, um das von dem UTC gesendete erste Paket über die NAT- oder FW-Einrichtung zu empfangen, die neue Quellen-IP-Adresse dem von dem UTC gesendeten ersten Paket zuzuteilen, und den Quellen-Port und den Ziel-Port des UTH, die Quellen-IP-Adresse des von dem UTC gesendeten ersten Pakets und die neue Quellen-IP-Adresse in dem von dem UTC gesendeten ersten Paket als Eintrag der UDP-Tunnelinformation zu speichern.

14. System nach Anspruch 12,
**dadurch gekennzeichnet, dass**
der UTC ausgestaltet ist, um das Paket, das von der ersten Einrichtung stammt, zu empfangen, und den UTH hinter dem IP-Header des ersten Pakets, das von der ersten Einrichtung stammt, einzusetzen; und
der UTS ausgestaltet ist, um das von dem UTC gesendete erste Paket über die NAT- oder FW-Einrichtung zu empfangen, die neue Quellen-IP-Adresse und einen neuen Quellen-Port dem von dem UTC gesendeten ersten Paket zuzuteilen, und den Quellen-Port und den Ziel-Port des UTH, den Quellen-Port in den UTH-Nutzdaten, die Quellen-IP-Adresse des von dem UTC gesendeten ersten Pakets, die neue Quellen-IP-Adresse und den neuen Quellen-Port in dem von dem UTC gesendeten ersten Paket als Eintrag der UDP-Tunnelinformation zu speichern.

15. System nach Anspruch 12, 13 oder 14,
wobei der UTC eine unabhängige Einrichtung oder ein eingebetteter Teil in einer Proxy-Einrichtung, einer NAT-Einrichtung, einer Firewall, einem Router oder einem Server ist;
der UTS eine unabhängige Einrichtung oder ein eingebetteter Teil in einer Proxy-Einrichtung, einer NAT-Einrichtung, einer Firewall, einem Router oder einem Server ist;
der UTC sich an einer Seite der NAT- oder FW-Einrichtung befindet und der UTS sich an der anderen Seite der NAT- oder FW-Einrichtung befindet; oder
der UTC sich an einer Seite der NAT- oder FW-Einrichtung befindet und der UTS sich in der NAT- oder FW-Einrichtung befindet.

16. System zum Realisieren einer NAT- oder FW-Einrichtungstraversierung, **gekennzeichnet durch**
eine erste Einrichtung, eine zweite Einrichtung, einen UDP-Tunnel-Client, UTC, einen UDP-Tunnel-Server, UTS, und eine NAT- oder FW-Einrichtung, wobei der UTC ausgestaltet ist, um einen UDP-Tunnel-Header, UTH, in ein von der ersten Einrichtung gesendetes erstes Paket einzusetzen und der UTS ausgestaltet ist, um dem ersten Paket eine neue Quellen-IP-Adresse zuzuteilen und um eine UDP-Tunnelinformation zu speichern, um einen UDP-Tunnel zwischen der ersten Einrichtung und der zweiten Einrichtung herzustellen; und wobei
die erste Einrichtung ausgestaltet ist, um ein zweites Paket über den UDP-Tunnel an die NAT- oder FW-Einrichtung zu übertragen; die NAT- oder FW-Einrichtung ausgestaltet ist, um das zweite Paket gemäß der UDP-Tunnelinformation an die zweite Einrichtung weiterzuleiten; und
die zweite Einrichtung ausgestaltet ist, um das zweite Paket zu empfangen.

## Revendications

1. Procédé de traversée d'un dispositif assurant la fonction de traduction d'adresses de réseau, NAT, ou de coupe-feu FW, **caractérisé par** l'étape consistant à :
établir un tunnel selon le protocole de datagrammes utilisateurs UDP, entre un premier dispositif et un second dispositif, le premier dispositif et le second dispositif se trouvant des deux côtés d'un dispositif NAT ou FW ;
dans lequel l'établissement du tunnel UDP entre le premier dispositif et le second dispositif comprend les étapes consistant à :
insérer un en-tête de tunnel UDP, UTH, dans un premier paquet envoyé par le premier dispositif ;
attribuer une nouvelle adresse IP de source au premier paquet ;
sauvegarder des informations de tunnel UDP ;
émettre sur le tunnel UDP, d'après les informations de tunnel UDP, un second paquet entre l'un des deux dispositifs et l'autre des deux dispositifs, via le dispositif NAT ou FW.

2. Procédé selon la revendication 1, comprenant en outre l'étape consistant à :
déployer un client de tunnel UDP, UTC et un serveur de tunnel UDP, UTS entre le premier dispositif et le second dispositif ;
dans lequel l'établissement du tunnel UDP comprend l'établissement du tunnel UDP entre le premier dispositif et le second dispositif avec le client UTC et le serveur UTS.

3. Procédé selon la revendication 2, dans lequel l'établissement du tunnel UDP avec le client UTC et le serveur UTS comprend les étapes consistant à :
recevoir par le client UTC le premier paquet provenant du premier dispositif et insérer par le client UTC l'en-tête de tunnel UDP, UTH, derrière l'en-tête de protocole internet, IP du premier paquet provenant du premier dispositif (201, 501) ; et
recevoir par le serveur UTS le premier paquet envoyé par le client UTC via le dispositif NAT ou FW, attribuer par le serveur UTS la nouvelle adresse IP de source au premier paquet, sauvegarder par le serveur UTS le port de source et le port de destination de l'en-tête UTH, l'adresse IP de source du premier paquet envoyé par le client UTC et la nouvelle adresse IP de source allouée au premier paquet envoyé par le client UTC afin de constituer une rubrique des informations de tunnel UDP (204).

4. Procédé selon la revendication 3, dans lequel l'émission du second paquet entre le premier dispositif et le second dispositif comprend les étapes consistant à :
remplacer par le serveur UTS l'adresse IP de source du second paquet envoyé à partir du client UTC par la nouvelle adresse IP de source, supprimer par le serveur UTS l'en-tête UTH et émettre par le serveur UTS le second paquet envoyé par le client UTC vers le second dispositif (205).

5. Procédé selon la revendication 3, comprenant en outre, après la réception du premier paquet envoyé par le client UTC via le dispositif NAT ou FW, l'étape consistant à :
lancer une recherche par le serveur UTS en utilisant comme index (203) l'adresse IP de source du premier paquet envoyé par le client UTC et le port de source de l'en-tête UTH ;
dans lequel l'attribution de la nouvelle adresse IP de source au premier paquet par le serveur UTS comprend l'étape consistant à :
attribuer par le serveur UTS la nouvelle adresse IP de source au premier paquet envoyé par le client UTC si les informations de tunnel UDP ne sont pas trouvées.

6. Procédé selon la revendication 2, dans lequel l'établissement du tunnel UDP avec le client UTC et le serveur UTS comprend les étapes consistant à :
recevoir par le client UTC le premier paquet provenant du premier dispositif et insérer par le client UTC l'en-tête UTH derrière l'en-tête IP du premier paquet provenant du premier dispositif (201, 501) ;
recevoir par le serveur UTS le premier paquet envoyé par le client UTC via le dispositif NAT ou FW, attribuer par le serveur UTS la nouvelle adresse IP de source au premier paquet envoyé par le client UTC et sauvegarder par le serveur UTS le port de source et le port de destination de l'en-tête UTH, l'adresse IP de source du premier paquet envoyé par le client UTC, la nouvelle adresse IP de source et le nouveau port de source du premier paquet envoyé par le client UTC afin de constituer une rubrique des informations de tunnel UDP (504).

7. Procédé selon la revendication 6, dans lequel l'émission du second paquet entre le premier dispositif et le second dispositif comprend les étapes consistant à :
remplacer par le serveur UTS l'adresse IP de source du second paquet envoyé à partir du client UTC par la nouvelle adresse IP de source, remplacer le port de source dans la charge utile de l'en-tête UTH par le nouveau port de source, supprimer par le serveur UTS l'en-tête UTH et émettre par le serveur UTS le second paquet envoyé par le client UTC vers le second dispositif (505).

8. Procédé selon la revendication 6, comprenant en outre, après la réception du premier paquet envoyé par le client UTC via le dispositif NAT ou FW, l'étape consistant à :
lancer une recherche par le serveur UTS en utilisant comme index (503) l'adresse IP de source du premier paquet envoyé par le client UTC, le port de source de l'en-tête UTH et le port de source de la charge utile de l'en-tête UTH ;
dans lequel l'attribution de la nouvelle adresse IP de source et du nouveau port de source au premier paquet par le serveur UTS comprend l'étape consistant à :
attribuer par le serveur UTS la nouvelle adresse IP de source et le nouveau port de source au premier paquet envoyé par le client UTC si les informations de tunnel UDP ne sont pas trouvées.

9. Procédé selon la revendication 2, dans lequel l'émission vers le premier dispositif du second paquet provenant du second dispositif, via le tunnel UDP, comprend les étapes consistant à :
lancer une recherche par le serveur UTS, en utilisant comme index l'adresse IP de destination du second paquet provenant du second dispositif, après réception du second paquet du second dispositif (402), ignorer le second paquet provenant du second dispositif (403) et terminer le processus si le tunnel UDP n'est pas trouvé ; et sinon
remplacer par le serveur UTS l'adresse IP de destination du second paquet provenant du second dispositif par l'adresse IP de source issue des informations de tunnel UDP, insérer par le serveur UTS, après l'en-tête IP du second paquet provenant du second dispositif, un en-tête UTH en prenant le port de source de l'en-tête UTH dans les informations de tunnel UDP comme port de destination et le port de destination de l'en-tête UTH dans les informations de tunnel UDP comme port de source (404) ; et
recevoir par le client UTC le second paquet envoyé par le serveur UTS via le dispositif NAT ou FW, supprimer par le client UTC l'en-tête UTH dans le second paquet envoyé par le serveur UTS et émettre par le client UTC vers le premier dispositif (405) le second paquet envoyé par le serveur UTS.

10. Procédé selon la revendication 3, dans lequel l'en-tête UTH comprend un en-tête UDP standard et une zone de protocole destinée à indiquer le type de premier paquet transporté dans le paquet original.

11. Procédé selon la revendication 10, dans lequel l'en-tête UTH comprend en outre une zone de type destinée à indiquer le type du paquet de tunnel UDP.

12. Système destiné à mettre en oeuvre une traversée d'un dispositif NAT ou FW, **caractérisé en ce qu'**il comprend un premier dispositif, un second dispositif, un client de tunnel UDP, UTC, un serveur de tunnel UDP, UTS, et un dispositif NAT ou FW, dans lequel le client UTC est configuré pour insérer un en-tête de tunnel UDP, UTH, dans un premier paquet envoyé par le premier dispositif et le serveur UTS est configuré pour attribuer une nouvelle adresse IP de source pour le premier paquet et pour sauvegarder des informations de tunnel UDP afin d'établir un tunnel UDP entre le premier dispositif et le second dispositif ; et
dans lequel le second dispositif est configuré pour émettre un second paquet vers le dispositif NAT ou FW, via le tunnel UDP ;
le dispositif NAT ou FW est configuré pour acheminer le second paquet vers le premier dispositif en fonction des informations de tunnel UDP ; et
le premier dispositif est configuré pour recevoir le second paquet.

13. Système selon la revendication 12, **caractérisé en ce que** :
le client UTC est configuré pour recevoir le premier paquet provenant du premier dispositif et pour insérer l'en-tête UTH derrière l'en-tête IP du premier paquet provenant du premier dispositif ; et
le serveur UTS est configuré pour recevoir le premier paquet envoyé par le client UTC via le dispositif NAT ou FW, pour attribuer la nouvelle adresse IP de source au premier paquet envoyé par le client UTC et pour sauvegarder le port de source et le port de destination de l'en-tête UTH, l'adresse IP de source du premier paquet envoyé par le client UTC et la nouvelle adresse IP de source dans le premier paquet envoyé par le client UTC, afin de constituer une rubrique des informations de tunnel UDP.

14. Système selon la revendication 12, **caractérisé en ce que** :
le client UTC est configuré pour recevoir le premier paquet provenant du premier dispositif et pour insérer l'en-tête UTH derrière l'en-tête IP du premier paquet provenant du premier dispositif ; et
le serveur UTS est configuré pour recevoir le premier paquet envoyé par le client UTC via le dispositif NAT ou FW, pour attribuer la nouvelle adresse IP de source et un nouveau port de source au premier paquet envoyé par le client UTC et pour sauvegarder le port de source et le port de destination de l'en-tête UTH, le port de source dans la charge utile de l'en-tête UTH, l'adresse IP de source du premier paquet envoyé par le client UTC, la nouvelle adresse IP de source et le nouveau porte de source dans le premier paquet envoyé par le client UTC, afin de constituer une rubrique des informations de tunnel UDP.

15. Système selon la revendication 12, 13 ou 14, dans lequel le client UTC est un dispositif autonome ou une partie intégrée dans un dispositif mandataire, un dispositif NAT, un coupe-feu, un routeur ou un serveur ;
le serveur UTS est un dispositif autonome ou une partie intégrée dans un dispositif mandataire, un dispositif NAT, un coupe-feu, un routeur ou un serveur ;
le client UTC est sur un côté du dispositif NAT ou FW et le serveur UTS est de l'autre côté du dispositif NAT ou FW ; ou
le client UTC est sur un côté du dispositif NAT ou FW et le serveur UTS est dans le dispositif NAT ou FW.

16. Système destiné à mettre en oeuvre une traversée d'un dispositif NAT ou FW, **caractérisé en ce qu'**il comprend un premier dispositif, un second dispositif, un client de tunnel UDP, UTC, un serveur de tunnel UDP, UTS, et un dispositif NAT ou FW, dans lequel le client UTC est configuré pour insérer un en-tête de tunnel UDP, UTH, dans un premier paquet envoyé par le premier dispositif et le serveur UTS est configuré pour attribuer une nouvelle adresse IP de source au premier paquet et pour sauvegarder des informations de tunnel UDP afin d'établir un tunnel UDP entre le premier dispositif et le second dispositif ; et
dans lequel le premier dispositif est configuré pour émettre un second paquet vers le dispositif NAT ou FW, via le tunnel UDP ;
le dispositif NAT ou FW est configuré pour acheminer le second paquet vers le second dispositif en fonction des informations de tunnel UDP ; et
le second dispositif est configuré pour recevoir le second paquet.
